# DEMANDE DE BREVET EUROPEEN

(11) **EP 4 410 603 A1**
(43) Date de publication de la demande: **07.08.2024**
(21) Numéro de dépôt: 24154289.3
(22) Date de dépôt: 26.01.2024
(51) Int. Cl.: B60R 11/04

(54) **SYSTÈME DE REFROIDISSEMENT POUR DISPOSITIF DE DÉTECTION**

(30) Priorité: 02.02.2023 FR 2300965
(71) Demandeur: Renault s.a.s, 92100 Boulogne Billancourt (FR)
(72) Inventeur: CLAIN, Fabien, 78280 GUYANCOURT (FR)

(57) **Abrégé**

La présente invention concerne un véhicule automobile (1), comprenant un pavillon (4), une garniture de pavillon (8), un pare-brise (2) et un dispositif de détection (14), par observation au travers du pare-brise (2), d'une scène de route en avant du véhicule (1), ce dispositif de détection (14) comprenant au moins un organe de détection (16), le véhicule (1) comprenant un système de refroidissement (24) du dispositif de détection (14), ce système de refroidissement (24) comprenant une pluralité d'orifices (26) configurés pour être traversés par un flux d'air refroidissant l'organe de détection (16) du dispositif de détection (14), le système de refroidissement (24) étant configuré pour faire circuler le flux d'air jusqu'à une zone (31) située entre le pavillon (4) et la garniture de pavillon (8).

## Description

La présente invention concerne le domaine des dispositifs de détection de scènes de route, et plus particulièrement des systèmes de refroidissement associés à de tels dispositifs.

De plus en plus de véhicules automobiles sont équipés de dispositifs de détection de scènes de route qui jouent un rôle d'assistance pour des conducteurs de ces véhicules automobiles, en leur fournissant des informations supplémentaires visant à améliorer et faciliter leur conduite. De tels dispositifs de détection ont ainsi des fonctions variées qui incluent notamment la détection d'obstacles, le respect des distances de sécurité par rapport à d'autres véhicules, la reconnaissance de panneaux de signalisation ou encore la reconnaissance de marquages au sol.

Les dispositifs de détection sont généralement placés, au sein d'un véhicule automobile, derrière le pare-brise à proximité du rétroviseur central, de sorte à offrir un champ de vision maximal pour appréhender au mieux la scène de route. Un tel positionnement expose cependant à la lumière directe du soleil pendant des périodes prolongées, ce qui entraîne une accumulation importante de chaleur. La caméra est également soumise au froid en hiver, ainsi qu'à des degrés d'humidité variables.

Un tel environnement extrême, et particulièrement l'exposition à la lumière du soleil cumulée à la chaleur émise par le dispositif de détection lui-même, peut entraîner un arrêt prolongé des fonctions du dispositif de détection. Le dispositif de détection est par exemple inactivé pendant plusieurs minutes, l'air circulant au sein d'un habitacle du véhicule ne permettant pas un refroidissement suffisant du dispositif de détection.

Il est ainsi nécessaire de mettre en place, pour accompagner le dispositif de détection, un système de refroidissement capable de refroidir l'air au voisinage du dispositif de détection pour s'assurer qu'une température de cet air est compatible avec des plages de valeurs associées à un fonctionnement correct du dispositif de détection. Il est par exemple connu du document WO 2015191550 A1 de mettre en oeuvre un système de refroidissement intégrant un ventilateur qui génère un flux d'air dirigé vers le dispositif de détection avant d'être rejeté dans l'habitacle du véhicule. Un tel système impose cependant des formes complexes du dispositif de détection pour permettre le renvoi du flux d'air au sein de l'habitacle.

La présente invention s'inscrit dans ce contexte en proposant un système de refroidissement d'un dispositif de détection équipant un véhicule automobile, ce système de refroidissement prévoyant une circulation optimisée d'un flux d'air au sein du véhicule.

La présente invention a ainsi pour principal objet un véhicule automobile, comprenant un pavillon, une garniture de pavillon, un pare-brise et un dispositif de détection, par observation au travers du pare-brise, d'une scène de route en avant du véhicule, ce dispositif de détection comprenant au moins un organe de détection, le véhicule comprenant un système de refroidissement du dispositif de détection, ce système de refroidissement comprenant une pluralité d'orifices configurés pour être traversés par un flux d'air refroidissant l'organe de détection du dispositif de détection, le système de refroidissement étant configuré pour faire circuler le flux d'air jusqu'à une zone située entre le pavillon et la garniture de pavillon.

Le véhicule automobile selon l'invention présente un pavillon qui participe à former une ossature métallique du véhicule, et une garniture de pavillon qui est un cache délimitant un volume de l'habitacle au niveau du pavillon, formant un élément esthétique à l'intérieur du véhicule. Le véhicule automobile est équipé d'un dispositif de détection d'une scène de route, un tel dispositif disposant de fonctionnalités d'assistance permettant de faciliter une expérience de conduite d'un conducteur du véhicule. Ce dispositif de détection comprend notamment un organe de détection, qui est par exemple une caméra, un capteur, ou plus généralement tout système capable de réaliser des opérations de détection sur la scène de route. Le véhicule est en outre équipé d'un système de refroidissement du dispositif de détection, qui permet de s'assurer que ce dernier n'excède pas des températures qui contreviendraient à son bon fonctionnement. Le système de refroidissement est configuré pour faire circuler un flux d'air jusqu'à une zone située entre le pavillon et sa garniture, autorisant ainsi une meilleure dissémination du flux d'air et donc un meilleur échange thermique.

Selon une caractéristique optionnelle de l'invention, l'organe de détection est une caméra.

Selon une caractéristique optionnelle de l'invention, le dispositif de détection comprend un cache couvrant l'organe de détection, les orifices étant ménagés au travers du cache.

Un tel cache est par exemple un boîtier au sein duquel est logé l'organe de détection. Les orifices sont ménagés sur au moins deux faces concourantes du cache, de sorte à améliorer la circulation du flux d'air à travers eux et à destination de l'organe de détection. Une telle organisation du système de refroidissement par rapport au dispositif de détection facilite une gestion des interfaces et notamment une intégration optimisée du système de refroidissement au sein du véhicule, le cache étant disposé dans un prolongement du pavillon. À l'inverse, dans l'art antérieur le système de refroidissement imposait des formes complexes du cache renfermant le dispositif de détection, du fait du renvoi du flux d'air directement dans l'habitacle.

Selon une caractéristique optionnelle de l'invention, le véhicule comprend une traverse de pavillon qui porte le pavillon, le système de refroidissement comprenant une pluralité de trous ménagés dans la traverse de pavillon, ces trous étant configurés pour être traversés par le flux d'air qui circule jusqu'à la zone située entre le pavillon et la garniture de pavillon.

La traverse de pavillon correspond à une pièce du pavillon qui s'étend d'un montant avant droit du véhicule à un montant avant gauche, le long d'un bord supérieur du pare-brise. Au sein de cette traverse de pavillon sont ménagés des trous traversants qui sont configurés pour permettre un passage du flux d'air. On comprend ainsi que le flux d'air généré par le système de refroidissement traverse les orifices ménagés dans le cache renfermant l'organe de détection, lèche ledit organe de détection puis traverse les trous de la traverse avant d'atteindre la zone située entre le pavillon et la garniture de pavillon.

Selon une caractéristique optionnelle de l'invention, au moins l'un des trous de la traverse de pavillon est disposé en regard d'une chambre délimitée au moins en partie par le cache.

Une telle chambre est délimitée à la fois par le cache du dispositif de détection et par le pare-brise, le cache étant par exemple plaqué contre le pare-brise pour former entre eux la chambre. L'organe de détection est donc disposé dans la chambre. Il en résulte qu'au moins un orifice du cache est aligné avec un trou de la traverse de pavillon, le flux d'air pouvant circuler de l'un à l'autre sans être dévié. Cela permet une circulation optimisée du flux d'air et donc un refroidissement amélioré du dispositif de détection.

Selon une caractéristique optionnelle de l'invention, les trous ménagés dans la traverse de pavillon présentent chacun une section comprise entre 50 et 80 mm².

Les trous ménagés dans la traverse de pavillon ont une forme oblongue. Un de ces trous présente ainsi une longueur, correspondant à sa plus grande dimension, comprise entre 11 et 13 millimètres, et une largeur, correspondant à sa plus petite dimension, comprise entre 5 et 7 millimètres. Avantageusement, ils ont une longueur de 12,2 millimètres et une largeur de 6,2 millimètres.

Selon une caractéristique optionnelle de l'invention, le système de refroidissement comprend au moins un organe de mise en circulation du flux d'air.

Un tel organe de mise en circulation du flux d'air est par exemple un ventilateur. L'organe de mise en circulation du flux d'air permet notamment de réguler un débit du flux d'air et participe à le diriger vers la zone située entre le pavillon et la garniture de pavillon.

Selon une caractéristique optionnelle de l'invention, le véhicule automobile comprend une console de pavillon associée à la garniture de pavillon, l'organe de mise en circulation du flux d'air étant porté par la console de pavillon.

La console de pavillon est par exemple clipsée sur la garniture de pavillon, à l'opposé du pavillon par rapport à sa garniture. La console de pavillon peut être fixée sur la traverse de pavillon, notamment par vissage et/ou clippage. La console de pavillon peut recevoir des interfaces pour différentes fonctions au sein du véhicule, par exemple des interfaces permettant de contrôler des fonctions sonores ou lumineuses. La disposition de l'organe de mise en circulation du flux d'air sur la console de pavillon correspond à un premier mode de réalisation.

Selon une caractéristique optionnelle de l'invention, l'organe de mise en circulation du flux d'air est configuré pour diriger le flux d'air depuis la zone entre le pavillon et la garniture de pavillon vers un habitacle du véhicule.

On comprend que dans le premier mode de réalisation, le flux d'air transite par la zone entre le pavillon et la garniture de pavillon avant d'être redirigé vers l'habitacle. Le flux d'air peut alors participer à des fonctions d'aération de cet habitacle.

Selon une caractéristique optionnelle de l'invention, l'organe de mise en circulation du flux d'air est porté par la traverse de pavillon.

Une telle disposition de l'organe de mise en circulation du flux d'air est un deuxième mode de réalisation. Dans ce cas, le flux d'air poursuit sa circulation dans la zone entre le pavillon et la garniture de pavillon jusqu'à une partie arrière du véhicule.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] illustre, schématiquement, une vue en coupe d'une portion d'un véhicule automobile selon l'invention ;
[Fig. 2] illustre, schématiquement, un cache d'un dispositif de détection équipant le véhicule de la figure 1 ;
[Fig. 3] illustre, schématiquement, une vue en perspective illustrant un flux d'air circulant au sein d'une zone située entre un pavillon et une garniture de pavillon du véhicule de la figure 1 ;
[Fig. 4] illustre, schématiquement, une vue en perspective de la zone située entre le pavillon et la garniture de pavillon de la figure 3 ;
[Fig. 5] illustre, schématiquement, une autre vue en perspective de la zone située entre le pavillon et la garniture de pavillon de la figure 3, une traverse du véhicule ayant été retirée.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

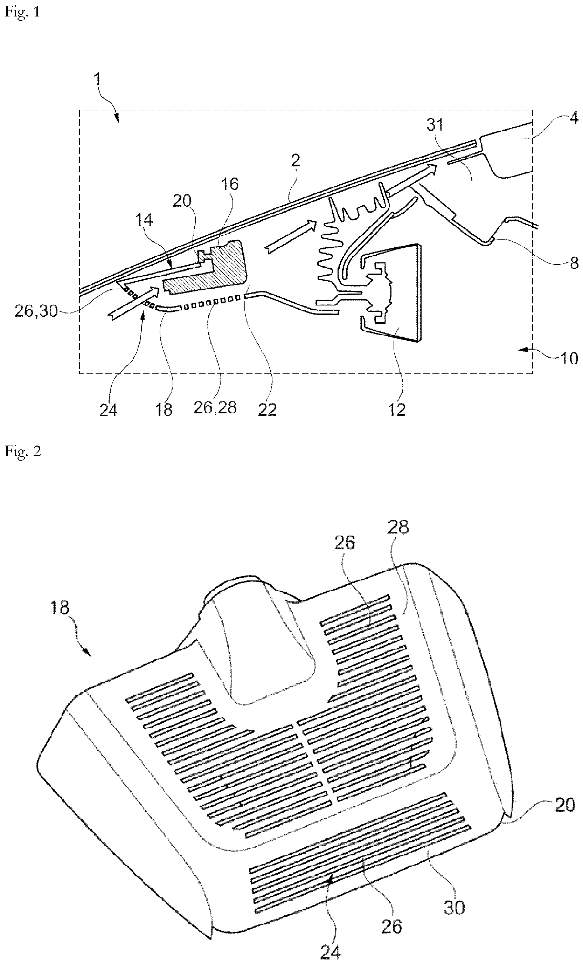

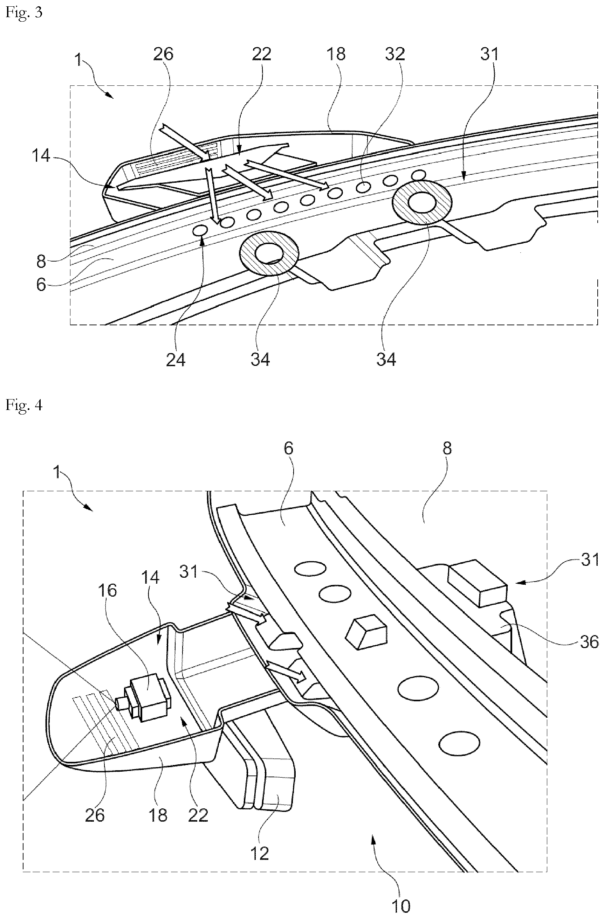

La figure 1 illustre ainsi, schématiquement, une vue en coupe d'une portion avant d'un véhicule automobile 1 selon l'invention. Le véhicule automobile 1 comprend un pare-brise 2, qui permet à un conducteur du véhicule automobile 1 une visualisation d'une scène de route se déroulant en avant de ce véhicule automobile 1. Le pare-brise 2 repose sur un pavillon 4, qui participe à former une armature métallique du véhicule automobile 1. Un tel pavillon 4 est notamment supporté par au moins un montant avant droit et un montant avant gauche, ces deux montants avant étant reliés l'un à l'autre par l'intermédiaire d'une traverse de pavillon 6, visible à la figure 4, qui correspond à une pièce métallique s'étendant d'un côté à l'autre du véhicule automobile 1 selon une direction d'extension principale sensiblement perpendiculaire à une direction de déplacement du véhicule automobile 1.

A l'intérieur de l'habitacle, le pavillon 4 est recouvert, au moins partiellement, par une garniture de pavillon 8, notamment pour des raisons esthétiques ainsi que des raisons d'insonorisation. Cette garniture de pavillon 8 recouvre une partie intérieure du pavillon 4 ; elle participe à ce titre à délimiter un habitacle 10 du véhicule automobile 1. On comprend ainsi que la garniture de pavillon 8 est disposée entre le pavillon 4 et l'habitacle 10. La traverse de pavillon 6 est quant à elle disposée entre la garniture de pavillon 8 et le pavillon 4.

Le pare-brise 2 constitue un support pour un rétroviseur central 12 du véhicule automobile 1. Le pare-brise 2 est ici porteur d'un dispositif de détection 14. Le fonctionnement de ce dispositif de détection 14 repose sur une observation de la scène de route en avant du véhicule automobile 1, une telle observation s'opérant à travers le pare-brise 2. L'observation de la scène de route inclut, de façon non limitative, une détection d'obstacles, une reconnaissance de panneaux de signalisation et de marquages au sol, et une détection d'autres véhicules en circulation. Le dispositif de détection 14 est capable de communiquer à un conducteur du véhicule automobile 1 les informations relevées lors de l'observation de la scène de route, et le cas échéant d'entraîner l'implémentation de mesures correctives de la conduite du conducteur. Ces mesures correctives sont par exemple, dans le cas d'une détection d'obstacles, la mise en oeuvre d'un freinage d'urgence, ou encore une correction de trajectoire du véhicule automobile 1 en cas de franchissement d'un marquage au sol. Bien entendu, le dispositif de détection 14 peut également être un organe qui participe à la mise en oeuvre d'une conduite autonome du véhicule.

L'observation de la scène de route par le dispositif de détection 14 est plus précisément réalisée par un organe de détection 16 de ce dispositif de détection 14. Un tel organe de détection 16 est ici une caméra, dont un angle et un positionnement sont adaptés pour permettre une visualisation optimale de la scène de route en avant du véhicule automobile 1. Alternativement, l'organe de détection 16 peut prendre la forme d'un capteur. En sus de l'organe de détection 16, le dispositif de détection 14 comprend des composants électroniques permettant une transmission des informations relevées lors de l'observation de la scène de route.

Le dispositif de détection 14 comprend par ailleurs un cache 18 qui est représenté de façon isolée à la figure 2. Ce cache 18 est par exemple réalisé en plastique. Le cache 18 est ici accolé au rétroviseur central 12, et est disposé entre ce dernier et le pare-brise 2 contre lequel il est apposé. Le cache 18 est par ailleurs solidarisé, directement ou par le biais d'une pièce intermédiaire, à la garniture de pavillon 8.

Le cache 18 correspond à un boîtier de réception de l'organe de détection 16 ; en d'autres termes, l'organe de détection 16 est logé dans le cache 18, qui constitue pour lui une protection physique ainsi qu'esthétique. Plus spécifiquement, l'organe de détection 16 est logé dans le cache 18 de sorte à être au moins partiellement recouvert par celui-ci, le cache 18 présentant au moins un dégagement 20 pour permettre à l'organe de détection 16 de visualiser la scène de route au travers du pare-brise 2 sans obstruction. Un tel dégagement 20 est notamment visible en figure 1. Le dégagement 20 est ménagé sur une face avant du cache 18, c'est-à-dire une face opposée à une portion rendant le cache 18 solidaire de la garniture de pavillon 8.

Comme cela a été évoqué précédemment, le cache 18 est apposé contre le pare-brise 2. Afin de constituer un logement pour l'organe de détection 16, le cache 18 du dispositif de dispositif de détection 14 forme une chambre 22 qu'il participe à délimiter avec le pare-brise 2. La chambre 22 est ainsi formée par le pare-brise 2 d'une part et par le cache 18 d'autre part, l'organe de détection 16 étant disposé entre les deux.

Selon l'invention, le véhicule 1 comprend un système de refroidissement 24 du dispositif de détection 14, et plus particulièrement de son organe de détection 16. Le système de refroidissement 24 génère au sein du véhicule 1 un flux d'air, illustré sur les figures par des flèches, qui a pour but de refroidir le dispositif de détection 14 pour éviter une surchauffe qui entraînerait un dysfonctionnement, voire un arrêt de l'organe de détection 14. Le flux d'air est par exemple généré à partir d'un air capté dans l'habitacle 10 du véhicule 1.

À cet effet, le système de refroidissement 24 comprend une pluralité d'orifices 26, qui sont configurés pour être traversés par le flux d'air. Le système de refroidissement 24 comprend ainsi des orifices 26 qui sont ménagés au travers d'une paroi du cache 18, de tels orifices 26 étant particulièrement visibles en figure 2. Les orifices 26 sont traversants, de sorte à permettre le passage du flux d'air. Comme cela est illustré à la figure 2, ces orifices 26 sont plus précisément ménagés sur une face principale 28 du cache 18, qui est sensiblement parallèle au pare-brise, ainsi que sur une face avant 30 de ce cache 18, qui est la face du cache 18 qui présente le dégagement 20. La face avant 30 prolonge la face principale 28 avec une courbure qui permet de délimiter la chambre 22.

Les orifices 26 ménagés dans le cache 18 ont une forme sensiblement rectangulaire. Au moins un de ces orifices 26 présente une longueur, correspondant à leur plus grande dimension, supérieure à 45 millimètres et une largeur, correspondant à leur plus petite dimension, comprise entre 2 et 3 millimètres, ces dimensions s'entendant aux tolérances de fabrication près. Avantageusement, tous les orifices présentent une longueur supérieure à 50 millimètres et une largeur de 2,5 millimètres. Comme cela est visible sur la figure 2, les orifices 26 de la face avant 30 ont une longueur qui diminue au fur et à mesure de leur éloignement du dégagement 20. Inversement, les orifices 26 de la face principale 28 s'élargissent au fur et à mesure de leur éloignement de la face avant 30. Une telle variation dans les dimensions des orifices 26 ménagés dans le cache 18 permet une circulation améliorée du flux d'air afin de refroidir le dispositif de détection 14 et son organe de détection 16.

Tel que visible sur la figure 1, le système de refroidissement 24 est configuré pour faire circuler le flux d'air jusqu'à une zone 31 située entre le pavillon 4 et la garniture de pavillon 8. On comprend ainsi que le flux d'air, après avoir traversé les orifices 26, est dirigé vers la zone 31 entre le pavillon 4 et la garniture de pavillon 8.

Dans certaines variantes de réalisation de l'invention, le système de refroidissement 24 comprend, pour faciliter une telle orientation du flux d'air en direction de la zone 31, une pluralité de trous 32 ménagés dans la traverse de pavillon 6 du pavillon 4, tel que cela est notamment illustré à la figure 3. Ces trous 32 sont traversants et sont configurés pour être traversés par le flux d'air. Les trous 32 sont ici alignés le long d'une portion repliée de la traverse de pavillon 6, de sorte qu'ils soient disposés côte-à-côte entre le montant avant droit et le montant avant gauche du véhicule 1 sur une portion de la traverse de pavillon 6 qui est centrale par rapport à ces deux montants.

Les trous 32 de la traverse de pavillon 6 présentent une forme sensiblement oblongue, une section de chacun de ces trous 32 étant comprise entre 50 et 80 mm². De façon avantageuse, les trous 32 présente une longueur comprise entre 11 et 13 millimètres et une largeur comprise entre 5 et 7 millimètres. De façon encore plus avantageuse, cette longueur mesure 12,2 millimètres et cette largeur mesure 6,2 millimètres, aux tolérances de fabrication près.

Du fait de la disposition des trous 32 le long de la traverse de pavillon 6 et de la disposition du cache 18, au moins l'un des trous 32 est aligné et en communication avec la chambre 22 délimitée au moins partiellement par ce cache 18. En outre, au moins l'un des trous 32 est aligné avec l'un des orifices 26 du cache 18, notamment un orifice 26 de la face avant 30 du cache 18. Le flux d'air peut ainsi circuler de façon optimale à travers les orifices 26, au sein de la chambre 22 et jusqu'aux trous 32, avant de prendre la direction de la zone 31 entre le pavillon 4 et la garniture de pavillon 8. En d'autres termes, le flux d'air traverse les orifices 26 du cache 18, la chambre 22, les trous 32 de la traverse de pavillon 6, puis parvient dans cette zone 31 située entre le pavillon 4 et la garniture de pavillon 8. Pour les variantes de réalisation dans lesquelles la traverse de pavillon 6 ne présente pas de trous 32, le flux d'air est directement dirigé depuis la zone 31 à partir des orifices 26.

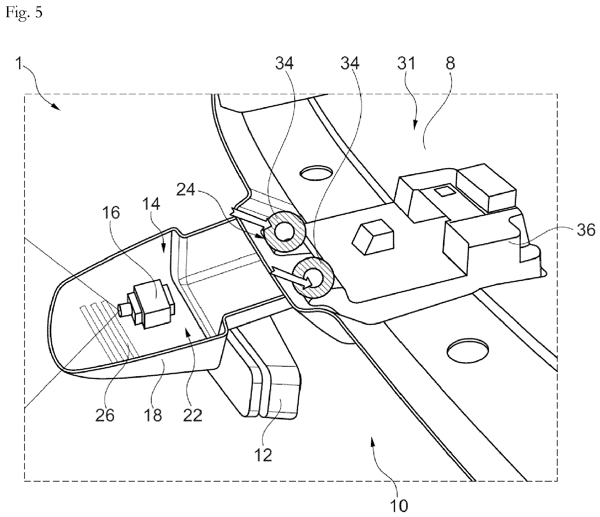

La circulation du flux d'air au sein du véhicule 1 est facilitée par la présence, au sein du système de refroidissement 24, d'au moins un organe de mise en circulation du flux d'air 34, comme par exemple un ventilateur. Un tel organe de mise en circulation du flux d'air 34 est représenté sur les figures sous la forme d'un cercle ; il est notamment visible aux figures 3 et 5.

On distingue deux modes de réalisation différents concernant l'organe de mise en circulation du flux d'air 34 selon la destination du flux d'air, un premier mode de réalisation étant illustré à la figure 5 tandis qu'un deuxième mode de réalisation est visible en figure 3.

Sur la figure 5, qui correspond au premier mode de réalisation, le système de refroidissement comprend deux organes de mise en circulation du flux d'air 34 qui sont portés par une console de pavillon 36. Cette console de pavillon 36 est associée à la garniture de pavillon 8 ; elle est plus spécifiquement clipsée sur cette dernière. La console de pavillon 36 est disposée en une position centrale au sein de l'habitacle 10 du véhicule 1, c'est-à-dire sensiblement à équidistance des montants avant droit et gauche. La console de pavillon 36 est ainsi disposée de sorte à être dans un alignement du cache 18 du dispositif de détection 14 et du rétroviseur central 12.

Les organes de mise en circulation du flux d'air 34 sont ici configurés pour diriger le flux d'air depuis la zone 31 entre le pavillon 4 et la garniture de pavillon 8 vers l'habitacle 10 ; à cet effet, les organes de mise en circulation du flux d'air 34 entraînent le flux d'air de sorte que celui-ci traverse la console de pavillon 36 afin d'être rejeté dans l'habitacle 10 du véhicule 1.

À l'inverse, dans le deuxième mode de réalisation illustré en figure 3, le flux d'air n'a pas vocation à être dirigé vers l'habitacle 10. Les organes de mise en circulation du flux d'air 34, qui sont ici au nombre de deux, sont alors portés par la traverse de pavillon 6. Les organes de mise en circulation du flux d'air 34 sont par exemple positionnés sur la traverse de pavillon 6 de telle sorte que les trous 32 de la traverse de pavillon 6 sont disposés entre le cache 18 du dispositif de détection 14 et ces organes de mise en circulation du flux d'air 34. Une telle disposition des organes de mise en circulation du flux d'air 34 permet d'une part de faciliter le passage du flux d'air à travers les trous 32 de la traverse de pavillon 6, ce flux d'air étant aspiré par les organes de mise en circulation du flux d'air 34, et d'autre part de faciliter un brassage du flux d'air au sein de la zone 31 entre le pavillon 4 et la garniture de pavillon 8.

La présente invention propose ainsi un système de refroidissement d'un dispositif de détection monté au sein d'un véhicule automobile, une régulation d'une température de ce dispositif de détection étant optimisée notamment par la circulation du flux d'air entre un pavillon et une garniture de pavillon du véhicule.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Véhicule automobile (1), comprenant un pavillon (4), une garniture de pavillon (8), un pare-brise (2) et un dispositif de détection (14), par observation au travers du pare-brise (2), d'une scène de route en avant du véhicule (1), ce dispositif de détection (14) comprenant au moins un organe de détection (16), le véhicule (1) comprenant un système de refroidissement (24) du dispositif de détection (14), ce système de refroidissement (24) comprenant une pluralité d'orifices (26) configurés pour être traversés par un flux d'air refroidissant l'organe de détection (16) du dispositif de détection (14), le système de refroidissement (24) étant configuré pour faire circuler le flux d'air jusqu'à une zone (31) située entre le pavillon (4) et la garniture de pavillon (8).

2. Véhicule automobile (1) selon la revendication précédente, dans lequel l'organe de détection (16) est une caméra.

3. Véhicule automobile (1) selon l'une quelconque des revendications précédentes, dans lequel le dispositif de détection (14) comprend un cache (18) couvrant l'organe de détection (16), les orifices (26) étant ménagés au travers du cache (18).

4. Véhicule automobile (1) selon l'une quelconque des revendications précédentes, comprenant une traverse de pavillon (6) qui porte le pavillon (4), le système de refroidissement (24) comprenant une pluralité de trous (32) ménagés dans la traverse de pavillon (6), ces trous (32) étant configurés pour être traversés par le flux d'air qui circule jusqu'à la zone (31) située entre le pavillon (4) et la garniture de pavillon (8).

5. Véhicule automobile (1) selon la revendication précédente, dans lequel au moins l'un des trous (32) de la traverse de pavillon (6) est disposé en regard d'une chambre (22) délimitée au moins en partie par le cache (18).

6. Véhicule automobile (1) selon l'une quelconque des revendications précédentes en combinaison avec la revendication 4, dans lequel les trous (32) ménagés dans la traverse de pavillon (6) présentent chacun une section comprise entre 50 et 80 mm².

7. Véhicule automobile (1) selon l'une quelconque des revendications précédentes, dans lequel le système de refroidissement (24) comprend au moins un organe de mise en circulation du flux d'air (34).

8. Véhicule automobile (1) selon la revendication précédente, comprenant une console de pavillon (36) associée à la garniture de pavillon (8), l'organe de mise en circulation du flux d'air (34) étant porté par la console de pavillon (36).

9. Véhicule automobile (1) selon la revendication précédente, dans lequel l'organe de mise en circulation du flux d'air (34) est configuré pour diriger le flux d'air depuis la zone (31) entre le pavillon (4) et la garniture de pavillon (8) vers un habitacle (10) du véhicule (1).

10. Véhicule automobile (1) selon la revendication 7 combinée à l'une quelconque des revendications 4 à 6, dans lequel l'organe de mise en circulation du flux d'air (34) est porté par la traverse de pavillon (6).
